(19) Europäisches Patentamt
European Patent Office
Office européen des brevets

(11) EP 4 765 216 A1

(12) EUROPEAN PATENT APPLICATION

(43) Date of publication:
24.06.2026 Bulletin 2026/26

(21) Application number: 25225457.8

(22) Date of filing: 19.12.2025

(51) International Patent Classification (IPC):
H01M 4/04 (2006.01)    H01M 4/131 (2010.01)
H01M 4/36 (2006.01)    H01M 4/525 (2010.01)
H01M 10/052 (2010.01)

(52) Cooperative Patent Classification (CPC):
H01M 4/0404; H01M 4/131; H01M 4/366;
H01M 4/525; H01M 10/052; H01M 2004/021;
H01M 2004/028

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 20.12.2024 KR 20240193144

(71) Applicants:
• SK On Co., Ltd.
Seoul 03161 (KR)
• SK Innovation Co., Ltd.
Seoul 03188 (KR)

(72) Inventors:
• GIL, Na Eun
34124 Daejeon (KR)
• KIM, Eun Hyo
34124 Daejeon (KR)
• YU, Do Ae
34124 Daejeon (KR)
• LEE, Hee Bin
34124 Daejeon (KR)
• YANG, Dong Il
34124 Daejeon (KR)

(74) Representative: Prüfer & Partner mbB
Patentanwälte · Rechtsanwälte
Sohnckestraße 12
81479 München (DE)

(54) CATHODE FOR LITHIUM SECONDARY BATTERY AND LITHIUM SECONDARY BATTERY INCLUDING THE SAME

(57) A cathode (100) for a lithium secondary battery and a lithium secondary battery comprising the cathode are provided. The cathode comprises a cathode current collector (105), and a cathode active material layer (110) comprising a cathode active material on at least one surface of the cathode current collector. A G value and measured at a surface of the cathode active material layer is less than 2.0.

**Fig. 4**

# EP 4 765 216 A1

**Description**

BACKGROUND

1. Field

The disclosure of this patent application relates to a cathode for a lithium secondary battery and a lithium secondary battery comprising the same.

2. Descriptions of the Related Art

A secondary battery that can be charged and discharged repeatedly has been widely employed as a power source of a mobile electronic device such as a camcorder, a mobile phone, a laptop computer, etc., according to developments of information and display technologies. Recently, a battery pack comprising the secondary battery is being developed and applied as a power source of an eco-friendly vehicle such as a hybrid automobile.

Examples of the secondary battery include a lithium secondary battery, a sodium secondary battery, a potassium secondary battery, a nickel-cadmium battery, a nickel-hydrogen battery, etc. The lithium secondary battery among the secondary batteries is being actively developed due to high operational voltage and energy density per unit weight, a high charging rate, a compact dimension, etc.

For example, the lithium secondary battery may comprise an electrode assembly comprising a cathode, an anode, and a separation layer (separator), and an electrolyte impregnating the electrode assembly. The lithium secondary battery may further comprise an outer packaging material that accommodates the electrode assembly and the electrolyte.

When a lithium secondary battery comprising a cathode active material having high-capacity properties is repeatedly charged and discharged, a structure of the cathode active material may be transformed to reduce a battery capacity.

SUMMARY

According to an aspect of the present disclosure, there is provided a cathode for a secondary battery having improved electrochemical properties.

According to an aspect of the present disclosure, there is provided a secondary battery having improved electrochemical properties.

In one aspect, the present disclosure provides a cathode for a lithium secondary battery comprising:

a cathode current collector; and
a cathode active material layer on at least one surface of the cathode current collector, wherein the cathode active material layer comprises a cathode active material,
wherein a line scan graph obtained using an atomic force microscope (AFM) with respect to a surface of the cathode active material layer has a plurality of peak, each having a long side and a short side,
wherein the surface of the cathode active material layer is characterized by a G value of less than about 2.0, and the G value is measured at the surface of the cathode active material layer and is defined by Equation 1 below:

$$[\text{Equation 1}]$$

$$G = \frac{\sum_{i=1}^{n} W_i/H_i}{n}$$

wherein, in Equation 1,
only peaks having a long side of 70 nm or longer are included in determining the G value,
n is the number of peaks used to calculate the G value and is an integer greater than or equal to 5,
$W_i$ is the length of the long side of an $i^{th}$ peak, and
$H_i$ is the length of the short side of the $i^{th}$ peak.

In one embodiment, the length of the long and short side of a first scanned peak and a last scanned peak are excluded in determining the G value.

In some embodiments, the G value is about 1.9 or less.

In some embodiments, wherein the cathode active material comprises lithium metal oxide particles having a single particle structure.

In some embodiments, the lithium metal oxide particles have an average particle diameter (D50) of about 1 $\mu$m to about 10 $\mu$m. In some embodiments, the average particle diameter (D50) is selected from about 2 $\mu$m to about 5 $\mu$m or from about 3 $\mu$m to about 4 $\mu$m.

In some embodiments, the lithium metal oxide particles comprise about 50 mol% to about 80 mol% of nickel based on the total number of moles of all elements, excluding lithium and oxygen of the lithium nickel metal oxide.

In some embodiments, the lithium metal oxide particles comprise about 50 mol% to 70 mol% of nickel based on the total number of moles of all elements, excluding lithium and oxygen of the lithium nickel metal oxide.

In some embodiments, the lithium metal oxide particles do not comprise cobalt.

In some embodiments, the lithium metal oxide particles comprise 0 mol% to about 10 mol% of cobalt based on the total number of moles of all elements, excluding lithium and oxygen of the lithium nickel metal oxide.

In some embodiments, the lithium metal oxide has a layered structure represented by $Li_xNi_aM_bO_{2+z}$, wherein $0.9 \leq x \leq 1.2$, $0.5 \leq a \leq 0.7$, $0.3 \leq b \leq 0.5$, and $-0.5 \leq z \leq 0.1$, and M comprises Co, Mn, and/or Al. In some embodiments, In some embodiments, the lithium metal oxide has a layered structure represented by $Li_xNi_aCo_{b1}M1_{b2}M2_{b3}O_{2+z}$, where $0.9 \leq x \leq 1.2$, $0.5 \leq a \leq 0.7$, $0 < b1 \leq 0.1$, $0 \leq b2 \leq 0.4$, $0 \leq b3 \leq 0.1$, and $-0.5 \leq z < 0.1$, M1 comprises Mn and/or Al, and M2 comprises one or more auxiliary elements selected from Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, and Zr. In some embodiments, the lithium metal oxide particles further comprise a coating or a doping element on a surface of the particles or within the crystal structure.

In some embodiments, the cathode active material layer comprises about 90 wt% or more of the cathode active material based on the total weight of the cathode active material layer.

In some embodiments, the G value is based on measurements taken after the lithium second battery is formed.

In some embodiments, formation is performed by charging the lithium secondary battery to 4.3 to 4.5 V and then discharging to 2.5 V.

In another aspect, the present disclosure provides a lithium secondary battery comprising the above-described cathode for a lithium secondary battery, and an anode disposed opposite the cathode.

In some embodiments, the lithium secondary battery has a driving voltage in a range from about 4.3 V to about 4.7 V. In some embodiments, the lithium secondary battery has a driving voltage in a range from about 4.35 V to about 4.5 V. In some embodiments, the cathode has a G value of about 1.8 or less.

In another aspect, the present disclosure provides a method of making a cathode active material for use in the cathode, comprising: coprecipitating a transition metal precursor; mixing the precursor with a lithium precursor; and calcining the mixture in an oxygen atmosphere at a heating rate of about 2 °C/min to about 4 °C/min to a temperature of about 650 °C to about 950 °C for about 8 hours to about 12 hours to form lithium metal oxide particles having a single-particle structure. In some embodiment, the calcination conditions are selected to provide a cathode having a G value of less than about 2.0 measured at a surface of the cathode active material layer.

According to exemplary embodiments of the present disclosure, irreversible crystal-structure changes in the cathode active material may be suppressed even during repeated charge-discharge cycling. Accordingly, the life-span characteristics of a lithium secondary battery may be improved.

A lithium secondary battery according to embodiments of the present disclosure comprises the cathode and may be charged and discharged at high voltage. As a result, the battery's energy density may be enhanced, and manufacturing cost may be reduced.

The secondary battery according to the present disclosure may be widely applied in green-technology fields, including electric vehicles, battery charging stations, and solar and wind power systems. The secondary battery may also be used in eco-friendly electric and hybrid vehicles to help reduce air pollution and greenhouse gas emissions.

BRIEF DESCRIPTION OF THE DRAWINGS

FIG. 1 is a schematic plan view illustrating a lithium secondary battery in accordance with example embodiments.
FIG. 2 is a cross-sectional view, respectively, illustrating a lithium secondary battery in accordance with example embodiments.
FIG. 3 is an atomic force microscope image of a surface of a cathode after charging and discharging the battery of Example 1.
FIG. 4 is a line scan graph along a straight line of FIG. 3.

DETAILED DESCRIPTION

According to embodiments of the present disclosure, a cathode and a lithium secondary battery are provided in which irreversible changes in the crystal structure of the cathode active material are suppressed.

The term "average particle size (D50)" used herein refers to an average particle size of a plurality of particles. D50 refers to an average particle size obtained at a point corresponding to 50% in a volume cumulative distribution of active material particles.

Methods suitable for measuring the volume cumulative distribution of the particles are not particularly limited, for example, in some embodiments, the volume cumulative distribution of the particles may be measured using a laser diffraction particle size analyzer, e.g., a Malvern 3000 device.

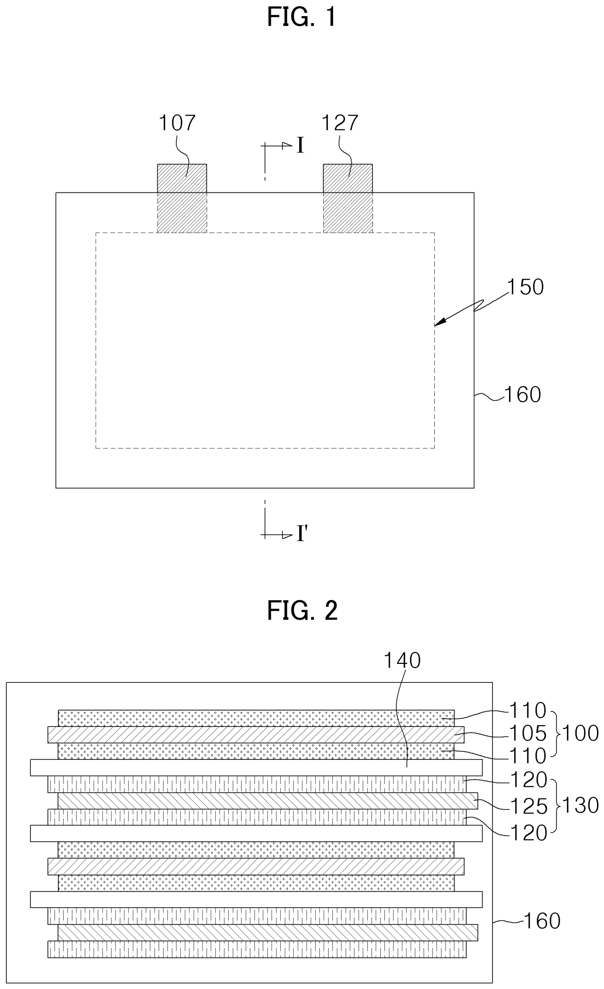

FIGS. 1 and 2 are a schematic plan view and a cross-sectional view, respectively, illustrating a lithium secondary battery according to embodiments. For example, FIG. 2 is a cross-sectional view taken along a line I-I' of FIG. 1.

Referring to FIGS. 1 and 2, a lithium secondary battery may comprise an electrode assembly comprising a cathode 100 and an anode 130. The electrode assembly may further comprise a separator 140 interposed between the cathode and the anode. The electrode assembly may be placed together with an electrolyte solution, to be impregnated with the electrolyte solution, in a case 160.

The cathode 100 may comprise a cathode current collector 105 and a cathode active material layer 110, and the cathode active material layer 110 may comprise a cathode active material. The cathode active material layer 110 may be disposed on one surface or both surfaces of the cathode current collector 105.

The cathode current collector 105 may comprise, e.g., stainless steel, nickel, aluminum, titanium, copper, or any alloy thereof. In certain embodiments, the cathode current collector comprises aluminum or an aluminum alloy.

The cathode active material may comprise a lithium metal oxide. The lithium metal oxide may comprise at least one of nickel, cobalt, manganese, and aluminum. In example embodiments, the lithium metal oxide comprises nickel and manganese. In such embodiment, a battery having increased capacity and displaying increased stability of the battery across its lifespan may be provided.

In example embodiments, in the lithium metal oxide may comprise about 50 mol% or more, or about 55 mol% or more, and less than about 80 mol%, about 70 mol% or less, or about 65 mol% or less, based on total moles of all elements excluding lithium and oxygen of the lithium metal oxide. In some embodiments, the lithium metal oxide may comprise about 50 mol% to about 70 mol%, or from about 55 mol% to about 65 mol% of nickel based on the total number moles of all elements, excluding lithium and oxygen of the lithium metal oxide.

As used herein, the term "about" is used to encompass within 10% of the indicated value. When modifying temperature, "about" is used to encompass within 5 degrees of the indicated temperature.

Without wishing to be bound by theory, by manufacturing a cathode in this way, changes in a crystal structure of the cathode active material during rapid charging and discharging of the battery may be minimized and/or prevented, therefore preventing an increase in internal resistance and significantly reducing a capacity of the cathode.

In example embodiments, the lithium metal oxide may comprise a layered structure represented by Chemical Formula 1 below.

[Chemical Formula 1] $\quad\quad Li_xNi_aM_bO_{2+z}$

In Chemical Formula 1, $0.9 \leq x \leq 1.2$, $0.5 \leq a \leq 0.7$, $0.3 \leq b \leq 0.5$, and $-0.5 \leq z \leq 0.1$. M may comprise Co, Mn, and/or Al.

The chemical structure represented by Chemical Formula 1 may represent a bonding relationship in the layered structure or the crystal structure in the cathode active material, but does not exclude additional elements. For example, in Chemical Formula 1, M may comprise Co and/or Mn, wherein Co and/or Mn are the main active element of the cathode active material together with Ni. Chemical Formula 1 is provided only to express the bonding relationship of the main active elements and is to be understood as a formula encompassing introduction and substitution of additional elements.

For example, in one embodiment, an auxiliary element may be included with the main active elements to enhance chemical stability of the cathode active material or a layered/crystal structure. The auxiliary element may be incorporated in the layered structure/crystal structure to form a bond. Examples of auxiliary elements that may be used include, but re not limited to, Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. Auxiliary element(s) may affect (e.g., improve) capacity/power characteristics of the cathode active material, and cathode active materials comprising one or more of these auxiliary elements are contemplated as within the scope of Chemical Formula 1.

In example embodiments, the lithium metal oxide may further comprise cobalt in an amount of greater than 0 mol% but less than about 10 mol%, based on the total number of moles of all elements, excluding lithium and oxygen in the lithium metal oxide. For example, the content of cobalt in the lithium metal oxide may be in a range from 1 mol% to about 10 mol%, or from about 1 mol% to about 6 mol% based on the total number of moles of elements, excluding lithium and oxygen.

Without wishing to be bound by theory, by manufacturing a cathode in this way, electrical conductivity and stability of the cathode active material may be improved.

According to some examples, the lithium metal oxide may not comprise cobalt. In such embodiments, the nickel content of the cathode active layer may be increased, and a higher-capacity battery may be provided.

In one embodiment, the lithium metal oxide comprises a layered structure or a crystal structure represented by Chemical Formula 1-1.

[Chemical Formula 1-1]     $Li_xNi_aCo_{b1}M1_{b2}M2_{b3}O_{2+z}$

In Chemical Formula 1-1, M1 may comprise Mn and/or Al. M2 may comprise one or more of the above-mentioned auxiliary elements. In Chemical Formula 1-1, $0.9 \leq x \leq 1.2$, $0.5 \leq a \leq 0.7$, $0 < b1 \leq 0.1$, $0 \leq b2 \leq 0.4$, $0 \leq b3 \leq 0.1$, $-0.5 \leq z \leq 0.1$, and $-0.5 \leq z \leq 0.1$.

In some embodiments, the lithium metal oxide may further comprise a coating element or a doping element. For example, elements the same as or similar to the auxiliary elements described above may be used as the coating element or the doping element. These elements may be used alone or in a combination of two or more therefrom as the coating element or the doping element. The coating element or the doping element may be present on a surface of the lithium metal oxide particle, or may penetrate through the surface of the lithium metal oxide particle to be in the bonding structure, such as represented by Chemical Formula 1 or Chemical Formula 1-1.

In some embodiments, the lithium nickel metal oxide particles have a single particle structure. As used herein, the term "single particle structure" excludes a secondary particle formed by agglomeration of multiple primary particles (e.g., more than ten particles) into a single particle. For example, the lithium nickel metal oxide particles may consist substantially of particles having a single particle structure or a single particle shape, and secondary particle structure formed by aggregation or agglomeration of the primary particles are excluded. The term "single particle structure" as used herein does not exclude, e.g., a single-particle structure in which two to ten single particles are attached or adhered to each other to form a single body or a monolithic structure. A single particle structure, in certain embodiments, may also include a structure in which multiple primary particles are merged and transformed into a substantially single particle. For example, the lithium nickel metal oxide particles may have a single particle structure comprising ten or fewer crystallites.

In one embodiment, the lithium nickel metal oxide particles have a single crystalline structure, which may be distinguished based on an ion image obtained by analyzing a cross-section of a particle using a focused ion beam (FIB). For example, if a particle has a single crystalline structure, a single crystal may be observed in the FIB analysis image based on differences in a crystal orientation. The single crystalline structure may have a structure in which one particle consists of one crystallite.

In example embodiments, an average particle diameter (D50) of the lithium metal oxide particles may be in a range from about 1 μm to about 10 μm. In some embodiments, the average particle diameter (D50) of the lithium metal oxide particles may be in a range from about 2 μm to about 10 μm, from about 2 μm to about 5 μm, from about 2 μm to about 4 μm, from about 3 μm to about 10 μm, from about 3 μm to about 5 μm, or from about 3 μm to about 4 μm.

Without wishing to be bound by theory, by manufacturing a cathode in this way, stability and durability of the cathode may be improved such that degradation of the cathode during repeated charge and discharge cycles of the battery may be prevented.

In some embodiments, the cathode active material may further comprise a lithium cobalt oxide-based active material, a lithium manganese oxide-based active material, a lithium nickel oxide-based active material, a lithium iron phosphate (LFP)-based active material (e.g., $LiFePO_4$), or the like.

In some embodiments, the cathode active material may further comprise a Mn-rich active material, a Li-rich layered oxide (LLO)/over-lithiated oxide (OLO) active material, or a Co-less active material having a chemical structure or a crystal structure represented by, e.g., Chemical Formula 2 below.

[Chemical Formula 2]     $p[Li_2MnO_3] \cdot (1-p)[Li_qJO_2]$

In Chemical Formula 2, $0 < p < 1$, $0.9 \leq q \leq 1.2$, and J may comprise at least one element selected from Mn, Ni, Co, Fe, Cr, V, Cu, Zn, Ti, Al, Mg, G and B.

**Methods of Making a Cathode Active Material**

Hereinafter, exemplary methods for preparing the cathode active material for a lithium secondary battery as described above will be described, however a person skilled in the art will recognize that the cathode active material can be prepared using a variety of methods, including variations of those described herein below.

In one embodiment, lithium metal oxide particles for use in a cathode active material may be prepared by reacting a transition metal precursor (e.g., a Ni-Co-Mn precursor) and a lithium precursor.

The transition metal precursor may be prepared through a coprecipitation reaction. For example, the transition metal precursor may be prepared through the coprecipitation reaction of metal salts. The metal salts may comprise a nickel salt, a manganese salt, and/or a cobalt salt.

Exemplary nickel salts may comprise nickel sulfate, nickel hydroxide, nickel nitrate, nickel acetate, a hydrate thereof, etc. These may be used singly or in a combination of two or more therefrom. For example, the nickel salt may be nickel sulfate.

Examples of the manganese salt comprise manganese sulfate, manganese acetate, a hydrate thereof, etc. These may be used alone or in a combination of two or more therefrom. For example, the manganese salt may be manganese sulfate.

Examples of the cobalt salt may comprise cobalt sulfate, cobalt nitrate, cobalt carbonate, a hydrate thereof, etc. These may be used alone or in a combination of two or more therefrom. For example, the cobalt salt may be cobalt sulfate.

The metal salts may be prepared as an aqueous solution by mixing the salts with a precipitant and/or a chelating agent in a ratio as prescribed in chemical formulae disclosed *infra.* The transition metal precursor may be co-precipitated from an aqueous solution in a reactor.

Suitable precipitants may comprise an alkaline compound, such as sodium hydroxide (NaOH), sodium carbonate ($Na_2CO_3$), or the like. For example, the precipitant may comprise sodium hydroxide.

Suitable chelating agents may comprise ammonia water, ammonium carbonate, or the like. For example, the chelating agent may comprise ammonia water.

Co-precipitation reaction may be performed at any temperature, for example, a temperature of about 40 °C to 60 °C for about 24 to 72 hours.

The lithium precursor may comprise, e.g., lithium carbonate, lithium nitrate, lithium acetate, lithium oxide, lithium hydroxide, or the like. These may be used alone or in a combination of two or more therefrom.

The lithium precursor and the transition metal precursor may then be mixed and calcined to produce the lithium transition metal oxide particles.

The mixture of the lithium precursor and the transition metal precursor may be heated to a calcination temperature and thereafter maintaining the temperature for a predetermined period to prepare the lithium metal oxide particles. In one embodiment, the calcination may be performed in an oxygen atmosphere.

In some embodiments, calcination comprises heating at a rate of about 2 °C/min to about 4 °C/min.

Without wishing to be bound by theory, when the heating rate is within the range, structural stability of the resulting cathode active material may be enhanced, so that a lithium battery that is stable even under high-voltage conditions may be manufactured.

In some embodiments, the lithium metal oxide may calcined at a temperature of about 500 °C to about 1000 °C, about 600 °C to about 1000 °C, about 500 °C to about 950 °C, about 600 °C to about 950°C, or about 650°C to about 950°C.

In some embodiments, the lithium metal oxide is calcined for about 5 hours to about 15 hours, about 6 hours to about 14 hours, about 6 hours to about 13 hours, about 5 hours to about 13 hours, about 6 hours to about 12 hours, about 7 hours to about 12 hours, or about 8 hours to about 12 hours.

By calcining under these conditions, non-uniform intercalation of the lithium ions may be prevented and a cathode having a desired G value can be prepared. A battery prepared with such a cathode may have improved lifespan, even when operated at high voltage. For example, a lithium secondary battery may be operated at a driving voltage of 4.3 V to 4.7 V. In some embodiments, the driving voltage of the lithium secondary battery may be in a range from 4.35 V to 4.5 V.

In some embodiments, the surface of the lithium metal oxide particles may be coated or doped after the calcination. For example, a coating material or a doping material containing the aforementioned coating element or doping element may be mixed with the lithium metal oxide particles, and then fired to the form the lithium metal oxide particles that are coated or doped onto or into the surface.

Suitable coating materials may comprise a salt of a coating element, e.g., a sulfate, a hydroxide, an oxide, etc., of the coating element.

The cathode active material layer may comprise, in exemplary embodiments, about 90 wt% to about 99.99 wt% of cathode active material based on a total weight of the cathode active material layer. In some embodiments, the cathode active material layer comprises about 95 wt% to about 99 wt% of cathode active material based on the total weight of the cathode active material layer.

In example embodiments, the cathode active material layer may comprise a conductive material, a binder, and/or a dispersant. For example, the cathode active material for a secondary battery may be mixed and stirred with a binder, a conductive agent, and/or a dispersant in a solvent to prepare a slurry. The slurry may be coated on a cathode current collector, and then dried and pressed to form a cathode.

The binder may comprise, e.g., an organic binder such as vinylidene fluoride-hexafluoropropylene copolymer (PVDF-co-HFP), polyvinylidene fluoride (PVDF), polyacrylonitrile, polymethylmethacrylate, etc., or an aqueous binder such as styrene-butadiene rubber (SBR) that may be used together with a thickener such as carboxymethyl cellulose (CMC).

For example, a PVDF-based binder may be used as a cathode binder. In this case, an amount of the binder for forming the cathode active material layer may be reduced, and an amount of the cathode active material particles may be increased, thereby improving power and capacity of the secondary battery.

The conductive material may be included to promote electron transfer between the active material particles. For example, the conductive material may comprise a carbon-based conductive material such as graphite, carbon black, graphene, carbon nanotubes, etc., and/or a metal-based conductive material such as tin, tin oxide, titanium oxide, a perovskite such as $LaSrCoO_3$ or $LaSrMnO_3$.

The solvent may comprise, e.g., one or more of N-methyl-2-pyrrolidone (NMP), dimethylformamide, dimethylacetamide, N,N-dimethylaminopropylamine, ethylene oxide, and tetrahydrofuran.

**Surface Defects**

When a battery comprising a cathode active material that comprises lithium metal oxide particles is charged, lithium ions may intercalate irregularly between layers of the lithium metal oxide. Accordingly, interlayer slippage, such as a gliding, may occur and cause irregularities on the surface of the charged cathode active material layer.

As the irregular intercalation of the lithium ions increases, the regularity of the shape of the cathode active material surface may not fully revert back to normal after discharge. This above-described phenomenon may be further exacerbated if the cathode active material has a single particle structure.

When lithium ions intercalate irregularly, some areas expand or change structure before others, stepped regions on the surface may form. When viewed with AFM, the stepped regions, appear as straight lines, which, if the stepped regions appear periodically, can be visualized by straight lines at a regular, repeating distance from each other.

The surface can be scanned for irregularities, e.g., peaks, along a direction perpendicular the longitudinal direction of the straight lines observed by the atomic force microscope in order to observe the largest irregular peaks. Data collected form the scan can be generated in the form of a line scan graph. A plurality of the line scan graphs may be obtained as sufficient number of peaks and therefore measurement may not be observed in any single line scan graph. To enhance data reliability, multiple line scan graphs may be obtained by performing multiple line scans on different random areas of the surface of the cathode active material layer after the formation charge/discharge cycle.

The presence of and shape of the surface peaks may be observed in the line scan graph, indicating each irregularity, which may have been caused by increased stress within the cathode active material due to the non-uniform intercalation of the lithium ions accumulated during the charge/discharge process. For example, the increased stress within the cathode active material may modify the crystal structure, resulting in deformation (distortion) of the cathode active material.

The frequency and shape of the peaks can be characterized by an overall surface roughness parameter, G. Each peak will have a long side and a short side. G can be calculated as the average ratio $W_i/H_i$ over n peaks observed in, e.g., an AFM line-scan of the cathode active material layer surface, according to Equation 1 below

$$[Equation\ 1]$$

$$G = \frac{\sum_{i=1}^{n} W_i/H_i}{n}$$

wherein $W_i$ is the long side length of the $i^{th}$ peak, $H_i$ is the short side length of the $i^{th}$ peak, n is the number of peaks counted, which is at least five, and only those peaks having a long side length of at least 70 nm are counted. In certain movements, n may be an integer from 5 to 200, from 5 to 100, from 5 to 20, or from 5 to 10. As n increases, reliability of the obtained value may be enhanced, but n may be selected in an appropriate range. If n is less than 5, the reliability of the G value may be lowered.

In certain embodiments, the first and the last peaks scanned are excluded from those peaks used to calculate the G value, particularly if the first and last peak shapes are particularly small or large. Exclusion of these peaks may enhance reliability of calculated values relying on peak size. For example, the G value may be calculated for intermediate peaks having a longer side length of 70 nm or longer among the peaks excluding the first scanned peak and the last scanned peak.

Any surface area of the cathode active material layer of the cathode may be observed and analyzed using the atomic force microscope to calculate a G value.

In certain embodiments, the G value may be based on a scan of the surface of the cathode active layer after the lithium secondary battery is charged and discharged. In certain embodiments, the G value is measured after the battery's formation process, for example, immediately upon completion of formation.

In example embodiments, the formation charge/discharge process may be performed by charging the lithium secondary battery to a voltage of about 4.3 V to about 4.5 V and discharging to a voltage of about 2.5 V. For example, the formation charge process may be performed at about 0.1 C and terminated by charging to about 20% state of charge (SOC) after discharge.

The G value may be controlled by factors such as the composition of the lithium metal oxide (the cathode active material), the calcination temperature, the calcination time for preparing the lithium metal oxide, a driving voltage of the battery, etc., but the factors of the G value are not necessarily limited thereto.

In some embodiments, the cathode 100 of the lithium secondary battery has a G value measured at a surface of the cathode active material layer 110 of less than about 2.0. In some embodiments, the G value may be about 1.9 or less, about 1.8 or less, about 1.7 or less, about 1.6 or less, or about 1.5 or less.

If the G value is 2.0 or greater, the formation charge/discharge cycles alone may induce excessive irreversible lithium intercalation, leading to significant capacity loss during the early cycles. cathode for a lithium secondary battery, non-uniform lithium-ion intercalation is prevented and surface irregularities on the cathode are minimized, thereby improving the battery's life-span characteristics.

As shown in FIG. 1, the lithium secondary battery comprises an anode 130 disposed opposite the cathode 100. The anode 130 may comprise an anode current collector 125 and an anode active material layer 120 formed by coating an anode active material on the anode current collector 125. The anode active material layer 120 may further comprise an anode binder and a conductive material.

For example, the anode active material may comprise a material capable of absorbing and desorbing lithium ions which may be widely known in the related art without any limitation. Examples of the anode active material comprise a carbon-based material such as a crystalline carbon, an amorphous carbon, a carbon composite, a carbon fiber; a lithium alloy; a silicon (Si)-based compound or tin.

Examples of an amorphous carbon comprise hard carbon, coke, a mesocarbon microbead (MCMB), a mesophase pitch-based carbon fiber (MPCF), and the like.

Examples of crystalline carbon comprise a graphite-based carbon such as natural graphite, artificial graphite, a graphitized coke, a graphitized MCMB, and a graphitized MPCF.

Elements in the lithium alloy comprise aluminum, zinc, bismuth, cadmium, antimony, silicon, lead, tin, gallium, indium, or the like.

The silicon-based compound may comprise, e.g., silicon, silicon oxide or a silicon-carbon composite compound such as silicon carbide (SiC).

In some embodiments, a content of the silicon active material based on a total weight of the anode active material may be in a range from 1 wt% to 20 wt%, from 1 wt% to 15 wt%, or from 1 wt% to 10 wt%.

The anode active material may be mixed and stirred with a binder, a conductive material, a dispersant, and/or a thickener in a solvent to prepare a slurry. The slurry may be coated on an anode current collector 125, and then dried and pressed to form an anode active material layer 120.

The coating process may comprise a gravure coating, a slot die coating, a multi-layer simultaneous die coating, an imprinting, a doctor blade coating, a dip coating, a bar coating, a casting, or the like, but is not limited thereto.

Non-limiting examples of suitable solvents include water, pure water, deionized water, distilled water, ethanol, isopropanol, methanol, acetone, n-propanol, t-butanol, or the like.

The aforementioned materials that may be used in the preparation of the cathode may also be used as the binder, the conductive material, and the thickener.

In some embodiments, the anode binder may comprise a styrene-butadiene rubber (SBR)-based binder, carboxymethyl cellulose (CMC), a polyacrylic acid-based binder, or a poly(3,4-ethylenedioxythiophene)(PEDOT)-based binder.

The separator 140 may be interposed between the cathode 100 and the anode 130. The separator 140 may comprise a porous polymer film formed of a polyolefin polymer such as an ethylene homopolymer, a propylene homopolymer, an ethylene/butene copolymer, an ethylene/hexene copolymer, an ethylene/methacrylate copolymer, etc. The separator 140 may also comprise a nonwoven fabric formed of a high-melting point glass fiber, a polyethylene terephthalate fiber, etc.

In some embodiments, an area (e.g., a contact area with the separator 140) and/or a volume of the anode 130 may be larger than that of the cathode 100. Accordingly, lithium ions generated from the cathode 100 may be easily transferred to the anode 130 without, e.g., precipitation.

In example embodiments, an electrode cell may comprise the cathode 100, the anode 130 and the separator 140, and a plurality of the electrode cells may be stacked to form an electrode assembly 150 in the form of, e.g., a jelly roll. For example, the electrode assembly 150 may be formed by winding, stacking, folding (or any like procedures) the separator 140.

The electrode assembly 150 may be housed in a case 160 together with an electrolyte solution to provide a lithium secondary battery. In example embodiments, a non-aqueous electrolyte solution may be used as the electrolyte solution.

The non-aqueous electrolyte solution may contain a lithium salt as an electrolyte and an organic solvent. The lithium salt may be expressed as, e.g., $Li^+X^-$, and examples of the anion ($X^-$) of the lithium salt include, but are not limited to, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

Examples of suitable organic solvents include, but are not limited to, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfoxide, acetonitrile, dimethoxyethane, diethoxy ethane, vinylene carbonate, sulfolane, gamma-butyrolactone, propylene sulfite, tetrahydrofuran, and the like. These may be used alone or in a combination of two or more therefrom.

In some embodiments, a solid electrolyte layer may be interposed between the cathode 100 and the anode 130. For example, the solid electrolyte layer may comprise an organic electrolyte such as a gel polymer electrolyte or a quasi-solid electrolyte, or an inorganic electrolyte such as an oxide-based solid electrolyte or a sulfide-based solid electrolyte. These may be used alone or in a combination of two or more therefrom.

As illustrated in FIG. 1, electrode tabs (a cathode tab and an anode tab) in each electrode cell may protrude from the cathode current collector 105 and the anode current collector 125, respectively, to extend to one side of the case 160. The electrode tabs may be fused together with the one side of the case 160 to be connected to an electrode lead (a cathode lead 107 and an anode lead 127), which are extended or exposed to an outside of the case 160.

For example, the lithium secondary battery may be manufactured in a cylindrical type using a can, a prismatic type, a pouch type, or a coin type.

When a battery comprising a cathode active material that comprises a lithium metal oxide is subjected to repeated charge and discharge, damage such as cracking may occur in regions where the gliding phenomenon arises. Consequently, an irreversible transformation of the layered structure to a rock-salt structure may occur. In addition, repeated cycling may increase the gliding distance, further degrading battery performance.

In a lithium secondary battery according to the present disclosure, the gliding phenomenon may be suppressed even during repeated charge and discharge cycles. As a result, the formation of surface irregularities on the cathode active material layer may be reduced, thereby improving the battery's life-span characteristics.

Examples and Comparative Examples

Preparation of cathode active material

Metal hydroxides having the molar ratios of nickel, cobalt, and manganese shown in Table 1 below and lithium hydroxide as a lithium source were mixed at a molar ratio of 1:1.03, and calcination was performed according to the calcination temperature and time shown in Table 1 to produce lithium metal oxide particles (diameter: 3.5 $\mu$m) with a single particle structure.

Fabrication of battery

A cathode slurry was prepared by mixing the lithium metal oxide particles, polyvinylidene fluoride (PVDF) as a binder, and carbon black as a conductive agent in a weight ratio of 96:2:2. The cathode slurry was uniformly coated on an aluminum foil (thickness: 12 $\mu$m), and then dried and pressed to form a cathode comprising a cathode active material layer with a surface density of 12 mg/cm$^2$ and a thickness of 35 $\mu$m.

An anode slurry was prepared by mixing artificial graphite and natural graphite as an anode active material, styrene-butadiene rubber as a binder, and carboxymethyl cellulose as a thickener in a weight ratio of 96:2:2, and then dispersing the mixture in water. The anode slurry was coated on an 8 $\mu$m-thick copper foil, dried, and pressed to obtain an anode.

The cathode and anodes prepared as described above were stacked with a 13 $\mu$m-thick polyethylene (PE) film separator interposed therebetween to form an electrode assembly. The electrode assembly was placed in a pouch having a size of 5 mm (thickness) x 50 mm (width) x 60 mm (length), and a non-aqueous electrolyte solution was injected to prepare a 2 Ah-lithium secondary battery.

A 1M LiPF$_6$ solution using a mixed solvent containing ethylene carbonate and ethyl methyl carbonate in a volume ratio of 25:75 was used as the non-aqueous electrolyte solution.

Measurement Example

(1) Measurement of G value after formation

In a formation charge and discharge process, the battery was charged at 0.25 C to an upper voltage limit shown in Table 1 (CC-CV 0.25 C, 4.3 V to 4.5 V, 0.05 C cut-off) and discharged to 2.5 V (CC 0.25 C, 2.5 V cut-off). Thereafter, the cathode of the battery was separated.

The cathode surface was analyzed using an atomic force microscope (AFM). A line scan graph was obtained by scanning the cathode surface along an arbitrary straight line using the AFM. The G value was calculated for intermediate peaks in which a longer side of two sides forming the peak was 70 nm or longer among peaks in the line scan graph obtained using the AFM excluding the first and the last scanned peaks in the scan direction.

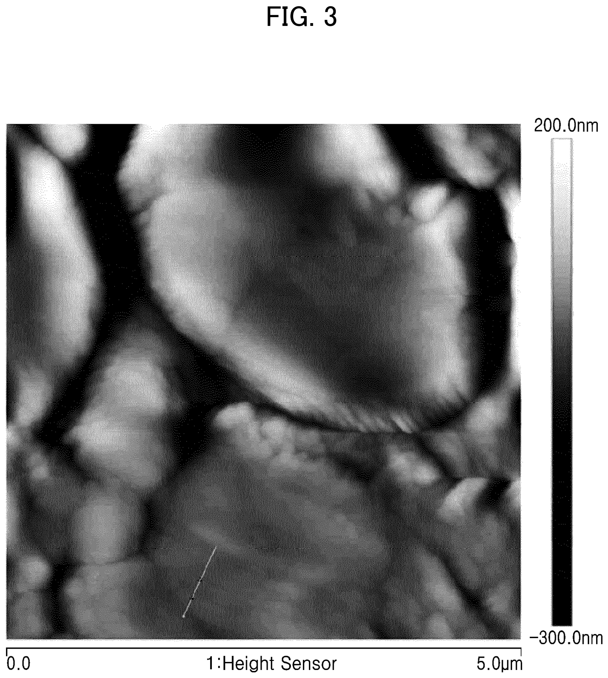

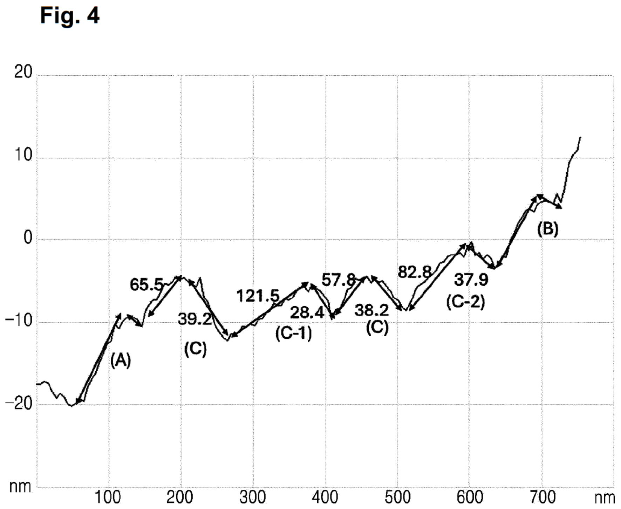

FIG. 3 is an atomic force microscope image of a surface of a cathode after charging and discharging the battery of Example 1. FIG. 4 is a line scan graph along a straight line of FIG. 3.

Referring to FIGS. 3 and 4, among intermediate peaks (C) excluding the first scanned peak (A) and the last scanned peak (B), the G value was calculated for those having a longer side length of 70 nm or longer (C-1, C-2, etc.) among the peaks.

For the multiple intermediate peaks, a ratio of the long side length of the $i^{th}$ peak ($W_i$) to the short side length of the $i^{th}$ peak ($H_i$) among the two sides forming the intermediate peak was calculated, and average value thereof was calculated as the G value according to Equation 1. In Examples and Comparative Examples, the G value was calculated for ten intermediate peaks for five or more line scanning graphs obtained by scanning along different straight lines.

[Table 1]

| | molar ratio | calcination | | charging voltage (V) | G |
|---|---|---|---|---|---|
| | Ni:Co:Mn | temperature (°C) | time (h) | | |
| Example 1 | 60:10:30 | 850 | 10 | 4.4 | 1.9 |
| Example 2 | 61:08:31 | 850 | 10 | 4.4 | 1.9 |
| Example 3 | 60:06:34 | 850 | 10 | 4.4 | 1.8 |
| Example 4 | 62:04:34 | 850 | 10 | 4.4 | 1.8 |
| Example 5 | 61:02:37 | 850 | 10 | 4.4 | 1.7 |
| Example 6 | 61:00:39 | 850 | 10 | 4.4 | 1.6 |
| Example 7 | 60:10:30 | 750 | 12 | 4.4 | 1.9 |
| Example 8 | 60:10:30 | 850 | 12 | 4.4 | 1.9 |
| Example 9 | 60:10:30 | 950 | 8 | 4.4 | 1.9 |
| Example 10 | 60:10:30 | 950 | 10 | 4.4 | 1.8 |
| Example 11 | 60:10:30 | 950 | 12 | 4.4 | 1.8 |
| Example 12 | 60:10:30 | 850 | 10 | 4.3 | 1.9 |
| Example 13 | 50:10:40 | 950 | 12 | 4.3 | 1.3 |
| Example 14 | 50:10:40 | 950 | 12 | 4.4 | 1.3 |
| Example 15 | 50:10:40 | 950 | 12 | 4.5 | 1.4 |
| Example 16 | 70:10:20 | 775 | 10 | 4.3 | 1.8 |
| Comparative Example 1 | 60:10:30 | 650 | 8 | 4.4 | 2.2 |
| Comparative Example 2 | 60:10:30 | 650 | 10 | 4.4 | 2.2 |
| Comparative Example 3 | 60:10:30 | 650 | 12 | 4.4 | 2 |
| Comparative Example 4 | 60:10:30 | 750 | 8 | 4.4 | 2.1 |
| Comparative Example 5 | 60:10:30 | 750 | 10 | 4.4 | 2 |
| Comparative Example 6 | 60:10:30 | 850 | 8 | 4.4 | 2 |
| Comparative Example 7 | 60:10:30 | 850 | 10 | 4.5 | 2 |
| Comparative Example 8 | 70:10:20 | 775 | 10 | 4.4 | 2 |
| Comparative Example 9 | 70:10:20 | 775 | 10 | 4.5 | 2.3 |

Experimental Example

The properties of the lithium secondary batteries of Examples and Comparative Examples were evaluated as follows, and the results are shown in Table 2.

(1) Evaluation on 80% capacity cycle

A single cycle was defined as a 0.3C CC/CV charge (0.05C cutoff) and a 0.3C CC discharge in a voltage range of 2.5 V to 4.4 V at 45°C. The number of cycles until the discharge capacity reached 80% of an initial capacity was measured. The number of cycles was expressed by rounding up to 10 digits, and evaluated as follows.
<The number of cycles evaluation>

   O: 1,000 cycles or more
   X: Less than 1,000 cycles

(2) Evaluation on resistance increase ratio

An internal resistance of the batteries after the evaluation of the above (1) was calculated as a percentage with respect to the initial resistance and evaluated as follows.

   O: 200% or less
   △: More than 200% to 250% or less
   X: More than 250%

[Table 2]

| | life-span property | | | |
|---|---|---|---|---|
| | the number of cycles | | resistance increase ratio (%) | |
| Example 1 | 1500 | O | 250 | △ |
| Example 2 | 1500 | O | 250 | △ |
| Example 3 | 1700 | O | 240 | △ |
| Example 4 | 1700 | O | 230 | △ |
| Example 5 | 1800 | O | 220 | △ |
| Example 6 | 2000 | O | 230 | △ |
| Example 7 | 1300 | O | 250 | △ |
| Example 8 | 1500 | O | 250 | △ |
| Example 9 | 1800 | O | 240 | △ |
| Example 10 | 1900 | O | 240 | △ |
| Example 11 | 2000 | O | 230 | △ |
| Example 12 | 2000 | O | 180 | O |
| Example 13 | 2500 | O | 170 | O |
| Example 14 | 2300 | O | 200 | O |
| Example 15 | 2000 | O | 230 | △ |
| Example 16 | 1200 | O | 230 | △ |
| Comparative Example 1 | 500 | X | 240 | △ |
| Comparative Example 2 | 700 | X | 240 | △ |
| Comparative Example 3 | 700 | X | 240 | △ |
| Comparative Example 4 | 800 | X | 270 | X |
| Comparative Example 5 | 800 | X | 270 | X |
| Comparative Example 6 | 900 | X | 250 | △ |
| Comparative Example 7 | 800 | X | 300 | X |
| Comparative Example 8 | 900 | X | 280 | X |

(continued)

| | life-span property | | | |
|---|---|---|---|---|
| | the number of cycles | | resistance increase ratio (%) | |
| Comparative Example 9 | 500 | X | 370 | X |

Referring to Table 2, even during repeated charging and discharging of 1000 cycles or more, the battery capacities of Examples were maintained at 80% or more. Further, the resistance increase ratio was suppressed even when the charging and discharging were repeated in the batteries of Examples having the G value of 1.8 or less.

However, in the batteries of Comparative Examples having the G value of 2.0 or more, the battery capacity was significantly reduced during 1000 cycles of repeated charging and discharging. Further, the resistance increase ratio was excessively increased, and long-term stability of the battery was deteriorated.

The above descriptions are intended to provide merely examples of the principles of the present disclosure, and other elements may be included without departing from the scope of the present disclosure.

The invention relates also to the following numbered aspects:

Aspect 1. A cathode 100 for a lithium secondary battery, comprising:
a cathode current collector 105; and a cathode active material layer 110 on at least one surface of the cathode current collector 105, wherein the cathode active material layer 110 comprises a cathode active material, wherein a line scan graph obtained using an atomic force microscope (AFM) with respect to a surface of the cathode active material layer 110 has a plurality of peaks, each characterized by a long side and a short side, wherein the surface of the cathode active material layer 110 is characterized by a G value of less than about 2.0, and the G value is measured at the surface of the cathode active material layer 110 and is defined by Equation 1 below:

[Equation 1]

$$G = \left( \sum_{i=1}^{n} \llbracket W_i/H_i \rrbracket \right)/n$$

wherein, in Equation 1,

only peaks having a long side length of 70 nm or longer are included in determining the G value,
n is the number of peaks used to calculate the G value and is an integer greater than or equal to 5,
$W_i$ is the length of the long side of an $i$th peak, and
$H_i$ is the length of the short side of the $i$th peak.

Aspect 2. The cathode 100 of aspect 1, wherein a first scanned peak and a last scanned peak are excluded in determining the G value.

Aspect 3. The cathode 100 of aspect 1 or 2, wherein the G value is 1.9 or less.

Aspect 4. The cathode 100 of any one of aspects 1 to 3, wherein the cathode active material comprises lithium metal oxide particles having a single particle structure.

Aspect 5. The cathode 100 of aspect 4, wherein the lithium metal oxide particles have an average particle diameter (D50) of from about 1 $\mu$m to about 10 $\mu$m.

Aspect 6. The cathode 100 of aspect 4 or 5, wherein the lithium metal oxide particles comprise about 50 mol% to about 80 mol% of nickel based on the total number of moles of all elements, excluding lithium and oxygen of the lithium nickel metal oxide.

Aspect 7. The cathode 100 of any one of aspects 4 to 6, wherein the lithium metal oxide particles comprise about 50 mol% to 70 mol% of nickel based on the total number of moles of all elements, excluding lithium and oxygen of the lithium nickel metal oxide.

Aspect 8. The cathode 100 of any one of aspects 4 to 7, wherein the lithium metal oxide particles do not comprise cobalt; or the lithium metal oxide particles comprise 0 mol% to about 10 mol% of cobalt based on the total number of moles of all elements, excluding lithium and oxygen of the lithium nickel metal oxide.

Aspect 9. The cathode 100 of any one of aspects 4 to 8, wherein the lithium metal oxide particles further comprise a coating or a doping element on a surface of the particles or within a crystal structure.

Aspect 10. The cathode 100 of any one of aspects 1 to 9, wherein the cathode active material layer comprises about 90 wt% or more of the cathode active material based on the total weight of the cathode active material layer.

Aspect 11. The cathode 100 of any one of aspects 1 to 10, wherein the G value is based on measurements taken after formation of the lithium secondary battery.

Aspect 12. The cathode 100 of aspect 11, wherein formation is performed by charging the lithium secondary battery to 4.3 to 4.5 V and then discharging to 2.5 V.

Aspect 13. A lithium secondary battery, comprising:

the cathode 100 according to any one of aspects 1 to 12; and an anode 130 disposed opposite the cathode 100.

Aspect 14. The lithium secondary battery of aspect 13, wherein the lithium secondary battery operates at a driving voltage in a range from about 4.3 V to about 4.7 V.

Aspect 15. The lithium secondary battery of aspect 13 or 14, wherein the lithium secondary battery operates at a driving voltage in a range from about 4.35 V to about 4.5 V.

**Claims**

1. A cathode 100 for a lithium secondary battery, comprising:

   a cathode current collector 105; and
   a cathode active material layer 110 on at least one surface of the cathode current collector 105, wherein the cathode active material layer 110 comprises a cathode active material,
   wherein a line scan graph obtained using an atomic force microscope (AFM) with respect to a surface of the cathode active material layer 110 has a plurality of peaks, each **characterized by** a long side and a short side,
   wherein the surface of the cathode active material layer 110 is **characterized by** a G value of less than about 2.0, and
   the G value is measured at the surface of the cathode active material layer 110 and is defined by Equation 1 below:

   $$[\text{Equation 1}]$$
   $$G = \frac{\sum_{i=1}^{n} W_i/H_i}{n}$$

   wherein, in Equation 1,

   only peaks having a long side length of 70 nm or longer are included in determining the G value,
   n is the number of peaks used to calculate the G value and is an integer greater than or equal to 5,
   $W_i$ is the length of the long side of an $i^{th}$ peak, and
   $H_i$ is the length of the short side of the $i^{th}$ peak.

2. The cathode 100 of claim 1, wherein a first scanned peak and a last scanned peak are excluded in determining the G value.

3. The cathode 100 of claim 1 or 2, wherein the G value is 1.9 or less.

4. The cathode 100 of any one of claims 1 to 3, wherein the cathode active material comprises lithium metal oxide particles having a single particle structure.

5. The cathode 100 of claim 4, wherein the lithium metal oxide particles have an average particle diameter (D50) of from about 1 $\mu$m to about 10 $\mu$m.

6. The cathode 100 of claim 4 or 5, wherein the lithium metal oxide particles comprise about 50 mol% to about 80 mol% of nickel based on the total number of moles of all elements, excluding lithium and oxygen of the lithium nickel metal oxide.

7. The cathode 100 of any one of claims 4 to 6, wherein the lithium metal oxide particles comprise about 50 mol% to 70 mol% of nickel based on the total number of moles of all elements, excluding lithium and oxygen of the lithium nickel metal oxide.

8. The cathode 100 of any one of claims 4 to 7, wherein the lithium metal oxide particles do not comprise cobalt; or the lithium metal oxide particles comprise 0 mol% to about 10 mol% of cobalt based on the total number of moles of all elements, excluding lithium and oxygen of the lithium nickel metal oxide.

9. The cathode 100 of any one of claims 4 to 8, wherein the lithium metal oxide particles further comprise a coating or a doping element on a surface of the particles or within a crystal structure.

10. The cathode 100 of any one of claims 1 to 9, wherein the cathode active material layer comprises about 90 wt% or more of the cathode active material based on the total weight of the cathode active material layer.

11. The cathode 100 of any one of claims 1 to 10, wherein the G value is based on measurements taken after formation of the lithium secondary battery.

12. The cathode 100 of claim 11, wherein formation is performed by charging the lithium secondary battery to 4.3 to 4.5 V and then discharging to 2.5 V.

13. A lithium secondary battery, comprising:

the cathode 100 according to any one of claims 1 to 12; and
an anode 130 disposed opposite the cathode 100.

14. The lithium secondary battery of claim 13, wherein the lithium secondary battery operates at a driving voltage in a range from about 4.3 V to about 4.7 V.

15. The lithium secondary battery of claim 13 or 14, wherein the lithium secondary battery operates at a driving voltage in a range from about 4.35 V to about 4.5 V.

# FIG. 1

107    127

I

150

160

I'

# FIG. 2

140

110
105  100
110

120
125  130
120

160

FIG. 3

Fig. 4

Europäisches
Patentamt

European
Patent Office

Office européen
des brevets

**EUROPEAN SEARCH REPORT**

Application Number

EP 25 22 5457

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BI YUJING ET AL: "Reversible planar gliding and microcracking in a single-crystalline Ni-rich cathode", SCIENCE, vol. 370, no. 6522, 11 December 2020 (2020-12-11), pages 1313-1317, XP093370867, US ISSN: 0036-8075, DOI: 10.1126/science.abc3167 | 1-8, 10-15 | INV. H01M4/04 H01M4/131 H01M4/36 H01M4/525 H01M10/052 |
| Y | * page 2, paragraph 6 * * page 4, paragraph 9; figures 4A-F * * page 1, paragraph 5 * * page 1, paragraph 5; figure 1A * * page 2, paragraph 6; figures A2, B2, A3, B3 * | 9 | |
| Y | US 2021/119204 A1 (CELASUN YAGMUR [FR] ET AL) 22 April 2021 (2021-04-22) | 9 | |
| A | * paragraphs [0009] - [0012], [0044], [0047] - [0053] * | 1-8, 10-15 | TECHNICAL FIELDS SEARCHED (IPC) |
| | -/-- | | H01M |

The present search report has been drawn up for all claims

| Place of search | Date of completion of the search | Examiner |
|---|---|---|
| The Hague | 5 March 2026 | Martin, Andréa |

EPO FORM 1503 03.82 (P04C01)

page 1 of 2

Europäisches
Patentamt

European
Patent Office

Office européen
des brevets

## EUROPEAN SEARCH REPORT

**Application Number**

EP 25 22 5457

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GUO HUI-JUAN ET AL: "Surface Degradation of Single-crystalline Ni-rich Cathode and Regulation Mechanism by Atomic Layer Deposition in Solid-State Lithium Batteries", ANGEWANDTE CHEMIE, [Online] vol. 61, no. 48, 26 October 2022 (2022-10-26), XP093370748, Hoboken, USA ISSN: 1433-7851, DOI: 10.1002/anie.202211626 Internet Retrieved from the Internet: URL:https://onlinelibrary.wiley.com/doi/fu ll-xml/10.1002/anie.202211626> [retrieved on 2026-02-26] * pages 2-5; figures 1, 2, 3, 4, 5 * ----- | 1-15 | |
| A | US 2018/083262 A1 (ZHOU CHAOYI [CN] ET AL) 22 March 2018 (2018-03-22) * paragraphs [0008], [0012], [0052], [0056], [0062], [0068]; example 7 * ----- | 1-8, 10-15 | |
| | | | TECHNICAL FIELDS SEARCHED (IPC) |

The present search report has been drawn up for all claims

| Place of search | Date of completion of the search | Examiner |
|---|---|---|
| The Hague | 5 March 2026 | Martin, Andréa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 5457

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2026

| Patent document cited in search report | Publication date | Patent family member(s) | | Publication date |
|---|---|---|---|---|
| US 2021119204 A1 | 22-04-2021 | CN | 111615496 A | 01-09-2020 |
| | | CN | 115763701 A | 07-03-2023 |
| | | EP | 3728129 A1 | 28-10-2020 |
| | | HU | E056745 T2 | 28-03-2022 |
| | | JP | 7052072 B2 | 11-04-2022 |
| | | JP | 2021508410 A | 04-03-2021 |
| | | KR | 20200106043 A | 10-09-2020 |
| | | PL | 3728129 T3 | 17-01-2022 |
| | | US | 2021119204 A1 | 22-04-2021 |
| | | WO | 2019120973 A1 | 27-06-2019 |
| US 2018083262 A1 | 22-03-2018 | CN | 106450155 A | 22-02-2017 |
| | | EP | 3296267 A1 | 21-03-2018 |
| | | JP | 6574222 B2 | 11-09-2019 |
| | | JP | 2018045998 A | 22-03-2018 |
| | | KR | 20180031556 A | 28-03-2018 |
| | | US | 2018083262 A1 | 22-03-2018 |

EPO FORM P0459

For more details about this annex : see Official Journal of the European Patent Office, No. 12/82